**Europäisches Patentamt**

**European Patent Office**

**Office européen des brevets**

(19)

(11) Numéro de publication: **0 210 915**
**B1**

(12)

# FASCICULE DE BREVET EUROPEEN

(45) Date de publication du fascicule du brevet:
**08.11.89**

(51) Int. Cl.⁴: **C 12 G 1/06**

(21) Numéro de dépôt: **86401610.0**

(22) Date de dépôt: **18.07.86**

(54) Cartouche tubulaire filtrante et son application à la fabrication de vin mousseux en bouteille.

(30) Priorité: **22.07.85 FR 8511183**

(43) Date de publication de la demande:
**04.02.87 Bulletin 87/6**

(45) Mention de la délivrance du brevet:
**08.11.89 Bulletin 89/45**

(84) Etats contractants désignés:
**DE FR IT**

(56) Documents cités:
**EP-A- 0 133 346**
**FR-A- 2 432 045**
**US-A- 3 631 654**
**US-H- 394 742**

(73) Titulaire: **MILLIPORE S.A., Zone Industrielle,**
**F-67120 Molsheim (FR)**

(72) Inventeur: **Lemonnier, Jean, 63 Allée de la Meute,**
**F-78110 Le Vesinet (FR)**

(74) Mandataire: **Rinuy, Santarelli, 14, avenue de la Grande**
**Armée, F-75017 Paris (FR)**

## Description

La présente invention concerne la préparation de vin mousseux et notamment de champagne par une deuxième fermentation, ou refermentation, en bouteille d'un vin non mousseux et des moyens spécialement destinés à la mise en oeuvre d'une telle méthode de préparation.

La méthode dite «champenoise» consiste à ajouter à du vin normal non mousseux, dont la première fermentation alcoolique est terminée, une liqueur de tirage contenant du sucre et la levure de fermentation assurant la transformation du sucre en gaz carbonique, la mise en bouteille étant effectuée avant ou après ces opérations d'addition.

Les bouteilles sont ensuite bouchées à l'aide d'un bouchon creux en matière plastique inséré dans le goulot de la bouteille et serties à l'aide d'une capsule métallique.

Elles sont alors stockées généralement à l'horizontale «sur lattes» pendant une longue période allant de plusieurs semaines à plusieurs mois dans des caves où la température est maintenue constante, généralement entre 12 et 18°C, pour que la fermentation se déroule avec la montée en pression correspondante ou «prise de mousse» dans les bouteilles.

Au cours de cette longue période de fermentation, chaque bouteille doit être remuée individuellement à de nombreuses reprises, pour éviter un dépôt de fermentation qui risquerait d'adhérer aux parois de la bouteille et, à la fin de cette période, les bouteilles sont stockées «sur pointes», c'est-à-dire inclinées goulot vers le bas, pour faciliter la décantation des levures et favoriser le dépôt des lies de fermentation à l'intérieur du bouchon creux en matière plastique et dans le goulot de la bouteille.

La fermentation terminée, les bouteilles sont transportées verticalement, goulot vers le bas et sont plongées dans une saumure de réfrigération maintenue à −10°C environ, pour former par congélation un glaçon de vin contenant les déchets des levures de fermentation.

Les bouteilles sont alors soumises à une opération de dégorgement qui consiste à retourner verticalement les bouteilles ainsi congelées, goulot vers le haut, et à les décapsuler, ce qui provoque, sous l'action de la pression régnant à l'intérieur de la bouteille, l'éjection du bouchon de plastique solidaire du glaçon contenant les sédiments de fermentation.

Le niveau des bouteilles est alors complété par addition d'une liqueur d'expédition et la bouteille bouchée par un bouchon définitif, qui est généralement un bouchon classique en liège.

La méthode champenoise traditionnelle que nous venons de décrire nécessite une main d'oeuvre importante, notamment lors de la fermentation pour le remuage des bouteilles, qui s'effectue souvent à la main; elle implique une superfice importante au sol pour le stockage des bouteilles et un temps de stockage assez long puisqu'il peut atteindre couramment une année entière; elle comporte en outre une étape de congélation du goulot des bouteilles, indispensable pour l'élimination des levures.

Des tentatives ont eu lieu pour tenter de remédier à ces inconvénients.

C'est ainsi que de nombreux dispositifs ont été mis au point pour effectuer un remuage mécanique des bouteilles disposées sur des palettes et permettant de leur faire prendre toutes les inclinaisons possibles depuis la position horizontale jusqu'à la position verticale et de les faire entrer en rotation dans tous les sens et sous différentes inclinaisons.

Toutefois, si ces dispositifs permettent de faire des économies de main d'oeuvre, ils nécessitent un investissement important qui a limité jusqu'ici leur utilisation.

On a également proposé récemment d'ajouter les levures dans les bouteilles sous forme de levures incluses dans des billes en matière polymère comme les alginates.

Ce procédé n'a toutefois eu que peu de développement jusqu'à présent, car il présente un certain nombre d'inconvénients.

Tout d'abord, on ajoute une matière étrangère au vin lors de la fermentation, à savoir la matière polymère constituant les billes et d'autre part, il présente des problèmes techniques qui ne sont pas encore entièrement résolus, à savoir une mauvaise retenue des levures dans les billes, une partie d'entre elles pouvant s'échapper et précipiter dans le vin. Enfin, il ne supprime pas les opérations de congélation et de dégorgement avec les pertes de vin contenu dans le glaçon de dégorgement qui en résultent.

La présente invention a pour objet un dispositif et un procédé permettant de supprimer ces inconvénients.

Le dispositif selon l'invention consiste en une cartouche tubulaire filtrante caractérisée en ce qu'elle comprend un corps tubulaire perforé et deux membranes filtrantes, une partie des perforations du corps de la cartouche étant recouverte par une membrane filtrante hydrophile et l'autre partie des perforations par une membrane filtrante hydrophobe.

Ces membranes sont toutes deux fixées de préférence à l'extérieur du corps de la cartouche, notamment par soudage ou collage.

Cette cartouche peut être remplie de levures provoquant la fermentation du sucre avec dégagement de gaz carbonique et fermée avant d'être introduite à l'intérieur des bouteilles contenant du vin additionné de sucre en vue de sa refermentation selon la méthode champenoise.

Le procédé selon l'invention consiste à utiliser une telle cartouche contenant des levures pour effectuer la refermentation du vin sucré en bouteille.

La membrane filtrante hydrophile permet au vin sucré de pénétrer et de venir au contact des levures situées à l'intérieur de la cartouche tubulaire filtrante et la membrane hydrophobe permet au gaz carbonique formé au cours de la réaction de fermentation du sucre à l'intérieur de la cartouche d'être évacué à l'extérieur.

Cette double circulation des liquides vers l'intérieur de la cartouche et des gaz vers l'extérieur, qui est nécessaire pour assurer la bonne marche de la réaction de fermentation est obtenue, selon la présente invention, grâce à la présence de deux membranes filtrantes, l'une hydrophile et l'autre hydrophobe.

Grâce à la présente invention, il n'est plus nécessaire de procéder au remuage, mécanique ou manuel, des bouteilles au cours de la période de fermentation, puisqu'il n'y a plus aucun risque d'adhérence ou de collage des levures aux parois internes des bouteilles, les levures étant emprisonnées à l'intérieur de la cartouche.

Il n'est également plus nécessaire de réfrigérer le goulot de la bouteille en vue de former un glaçon contenant les résidus des levures de fermentation, puisque la cartouche tubulaire filtrante, qui contient toutes les levures, peut être récupérée après fermentation, lors de l'ouverture par décapsulage des bouteilles soit à la main ou mécaniquement si la cartouche est munie d'éléments permettant sa préhension, soit, mieux encore, par éjection sous l'influence de la pression régnant à l'intérieur de la bouteille, si la cartouche est munie d'un embout cylindrique servant de bouchon étanche dans le goulot de la bouteille et d'un couvercle assurant la fermeture étanche de la cartouche elle-même.

Il convient de noter également qu'aucune matière étrangère n'est introduite dans le vin sucré à fermenter, mais uniquement une cartouche tubulaire étanche constituée de matériaux biologiquement inertes car, selon l'invention, c'est le vin sucré qui vient au contact des levures assurant la deuxième fermentation avec dégagement de gaz carbonique et non les levures qui sont introduites directement dans le vin sucré, comme dans les procédés antérieurement connus.

L'invention va maintenant être décrite à l'aide des dessins ci-joints, où les membranes ont été supposées transparentes pour ne pas masquer leur structure sous-jacente, et sur lesquels:

— la figure 1 représente une première forme de réalisation d'une cartouche tubulaire filtrante selon l'invention vue de face;

— la figure 2 représente une vue de gauche de la cartouche tubulaire filtrante représentée sur la figure 1;

— la figure 3 représente une coupe selon la ligne BB' de la figure 2;

— la figure 4 représente une coupe selon la ligne AOA' de la figure 3;

— la figure 5 représente une autre forme de réalisation d'une cartouche tubulaire filtrante selon l'invention, vue de face;

— la figure 6 représente une vue de gauche de la cartouche tubulaire filtrante représentée sur la figure 5;

— la figure 7 représente une coupe selon la ligne BB' de la figure 6;

— la figure 8 représente une coupe selon la ligne AOA' de la figure 7;

— la figure 9 représente une cartouche tubulaire filtrante, selon la forme de réalisation des figures 1 à 4, enfoncée dans le goulot d'une bouteille.

— les figures 10 et 11 représentent une troisième forme de réalisation d'une cartouche tubulaire filtrante selon l'invention munie d'un élément de flottaison et représentée respectivement en cours de fermentation dans la bouteille et à l'ouverture de cette dernière.

— la figure 12 représente une vue de face d'une quatrième forme de réalisation, qui est la forme préférée de la cartouche selon la présente invention;

— les figures 13 et 14 représentent respectivement des coupes selon les lignes BB' et CC' de la cartouche représentée sur la figure 12;

— la figure 15 représente une coupe selon la ligne AA' de la figure 12;

— la figure 16 est une coupe selon la ligne DOD' de la figure 14;

— et la figure 17 représente la même vue en coupe que la figure 14, à une échelle légèrement plus grande et montrant le bourgeonnement des levures vers l'axe de la cartouche qui se produit lors de la fermentation.

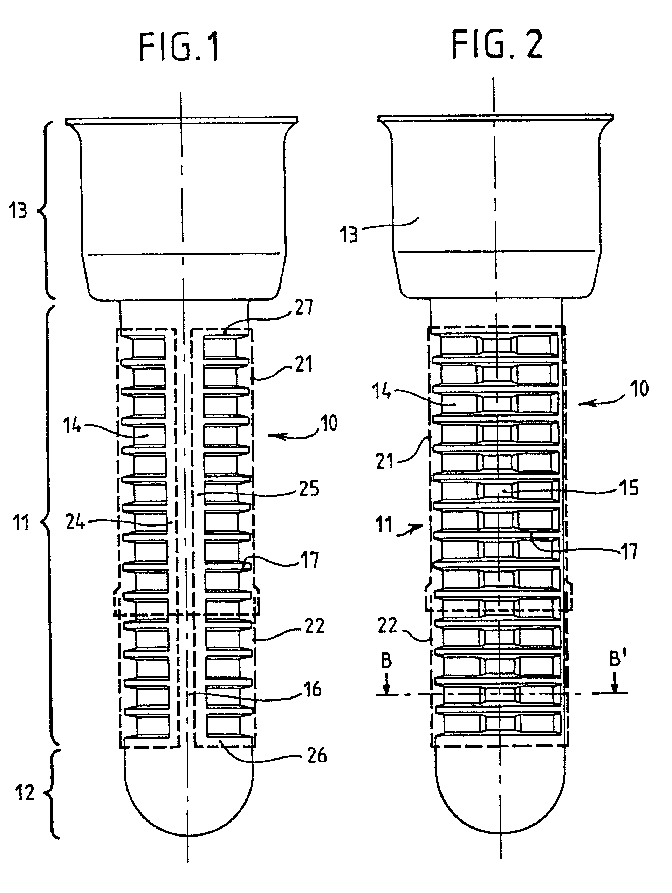

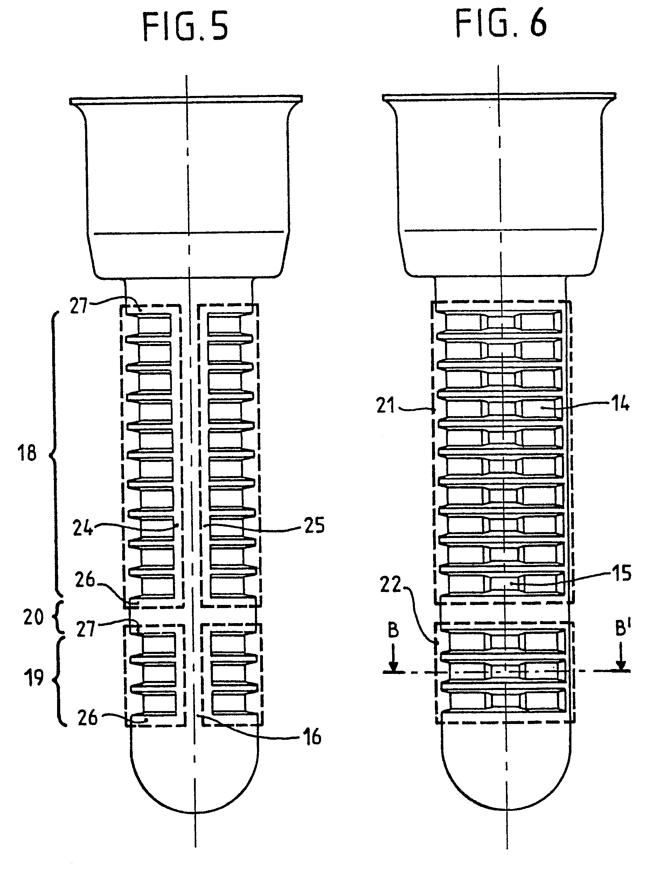

La cartouche tubulaire filtrante représentée tant sur la variante des figures 1 à 4 et 9 que sur celles des figures 5 à 8 porte la référence 10.

Cette cartouche comporte un corps tubulaire perforé 11 de forme généralement cylindrique, dont l'extrémité inférieure 12 est fermée et dont l'extrémité supérieure ouverte comporte un embout cylindrique 13 de diamètre supérieur à celui du corps tubulaire 11.

Le corps tubulaire 11 de la cartouche comporte une série de rainures extérieures 14 et des perforations 15 pratiquées à l'intérieur de ces rainures.

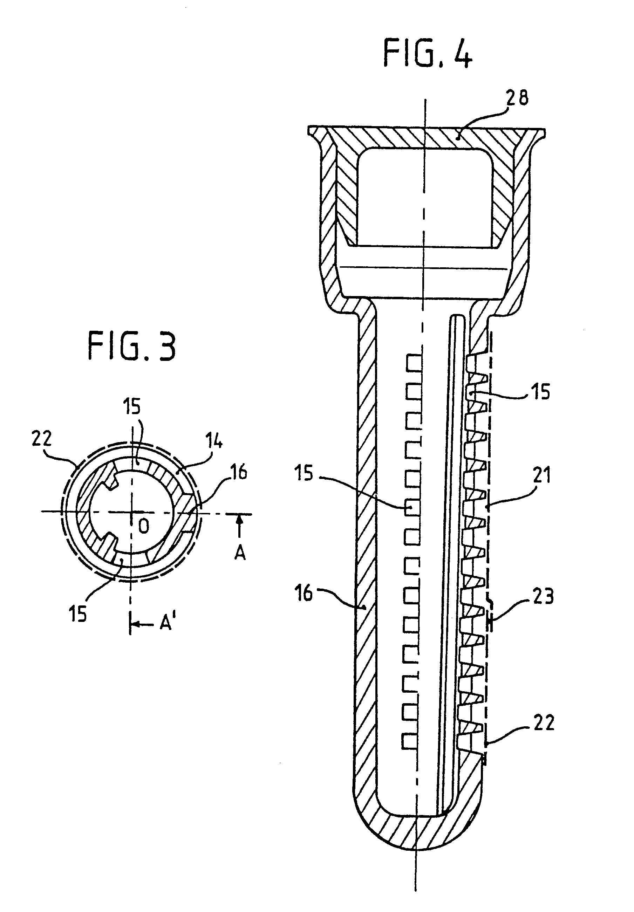

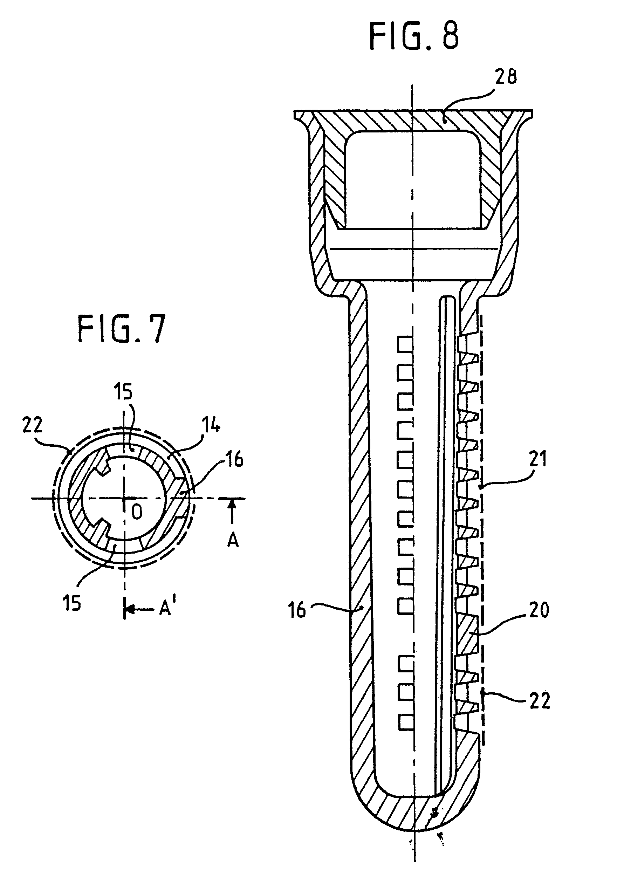

Ces rainures de drainage, telles que représentées sur les figures 1 à 8, ont une forme circulaire de même axe que le corps tubulaire; elles sont délimitées par des rebords circulaires 17 et occupent plus de trois quarts de la circonférence d'une coupe transversale du corps 11, comme le montrent plus particulièrement les figures 3 et 7.

Les rainures 14 laissent une partie rectiligne 16 de la surface extérieure du corps 11 qui est non rainurée et alignée selon une génératrice du corps tubulaire (voir figures 1, 3, 5 et 7).

A l'intérieur de ces rainures 14 sont pratiquées deux séries ou plus de perforations 15, de forme approximativement rectangulaire, alignées respectivement selon une direction parallèle à l'axe du corps 11 et disposées aux deux extrémités d'un plan diamétral de ce dernier et de préférence à angle droit par rapport à la partie non rainurée 16 (figures 3 et 7).

Dans la variante de réalisation représentée sur les figures 1 à 4, la totalité de la hauteur de la surface extérieure cylindrique du corps tubulaire 11 est rainurée, à l'exception des parties de raccordement avec les extrémités inférieure 12 et supérieure 13.

Par contre, dans la variante représentée sur les figures 5 à 8 (voir en particulier la figure 5), la surface extérieure du corps 11 présente deux zones rainurées distinctes 18 et 19, séparées par une zone intermédiaire non rainurée 20, dont le rôle sera précisé ci-après.

Ces deux zones rainurées 18 et 19 ont une hauteur inégale, celle adjacente à l'extrémité supérieure ayant une plus grande longueur que celle adjacente à l'extrémité inférieure (voir figures 5 et 6).

La totalité des zones rainurées et perforées du corps tubulaire 11 est recouverte par deux membranes filtrantes, l'une hydrophile 21 et l'autre hydrophobe 22.

Dans le cas de la variante des figures 1 à 4, les deux membranes filtrantes 21 et 22 peuvent être préparées à partir de deux rubans composés desdites membranes et soudés ensemble dans le sens de la longueur, selon une ligne de soudure intermédiaire 23 pour former un ruban mixte à deux membranes de longueur indéterminée, mais dont la largeur correspond à la hauteur totale de la surface extérieure rainurée et des parties de raccordement non rainurées du corps tubulaire 11.

Il est à noter que ce ruban mixte peut être composé d'une plus ou moins grande proportion de l'un ou l'autre des deux types de membranes selon la position de la ligne de soudure 23.

Ce ruban mixte à deux membranes est découpé selon des longueurs correspondant à la longueur du corps tubulaire 11 à revêtir. Les longueurs de ruban ainsi découpées sont soudées de façon à ce que chaque extrémité, 24, 25, adhère de manière étanche selon une génératrice du corps tubulaire dans la partie rectiligne 16 non rainurée de ce dernier.

Les bords 26, 27 des longueurs de ruban ainsi découpées sont également soudées de manière étanche sur les parties non rainurées de raccordement du corps tubulaire 11 à ses deux extrémités.

Enfin, pour que les membranes filtrantes 21 et 22 résistent bien aux pressions qui s'établiront lors de la fermentation dans les bouteilles, les membranes sont également soudées circulairement sur chacun des rebords 17 définissant les rainures 14.

Dans la variante représentée sur les figures 5 à 8, chacune des membranes filtrantes 21 ou 22 est préparée à partir d'un ruban individuel dont la longueur correspond à la hauteur de la zone rainurée 18 ou 19, du corps tubulaire à recouvrir et il n'y a donc pas dans cette forme de réalisation de chevauchement entre les membranes avec ligne de soudure intermédiaire 23.

C'est ainsi que le ruban de membrane filtrante hydrophile 21 est découpé en longueurs correspondant à la hauteur de la zone rainurée 18 et le ruban de membrane filtrante hydrophobe 22, de largeur plus réduite que la membrane 21, est découpé en longueurs correspondant à la hauteur de la zone rainurée 19.

Chacune de ces longueurs de membranes filtrantes 21 et 22 est soudée de façon à ce que ses extrémités 24, 25 et ses bords 26, 27 soient soudées respectivement dans la partie rectiligne 16 non rainurée et les parties de raccordement à ses extrémités du corps tubulaire 11 ou la zone non rainurée 20.

De même, chacune de ces longueurs de membranes filtrantes 21 et 22 est soudée, comme dans la variante des figures 1 à 4, circulairement sur les rebords 17 des rainures 14.

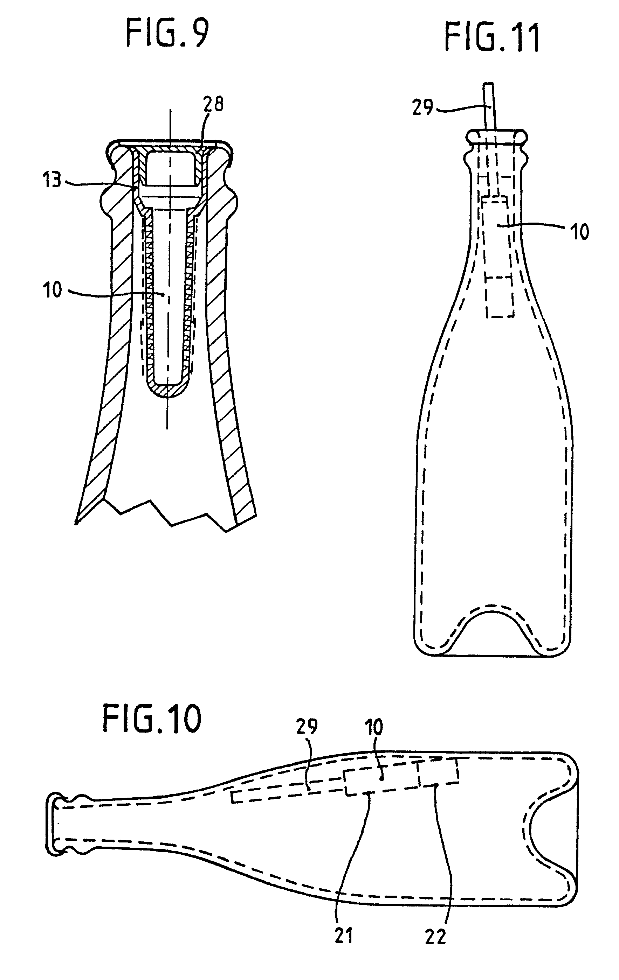

L'extrémité inférieure du corps tubulaire 11 est fermée par une paroi formant fond et son extrémité supérieure se raccorde à un embout cylindrique 13 dont le diamètre supérieur à celui du corps tubulaire, correspond au diamètre interne du goulot d'une bouteille de champagne, comme représenté sur la figure 9.

Cet embout cylindrique 13 peut être muni d'un couvercle amovible 28 (voir les figures 4 et 8).

L'intérêt de l'utilisation d'une telle cartouche tubulaire filtrante selon l'invention pour la refermentation du vin en bouteille est considérable.

Tout d'abord, aucune matière étrangère non inerte n'est introduite directement dans le vin, la cartouche filtrante qui peut être fabriquée en matière thermoplastique, de préférence souple comme le polyéthylène, contenant toutes les levures nécessaires à la fermentation.

On peut utiliser non seulement des levures classiques utilisées pour assurer une telle fermentation comme les Saccharomyces cerevisiae et Saccharomyces bayanus, mais également d'autres levures qui n'étaient pas jugées convenir jusqu'à présent par suite de la tendance qu'elles avaient à adhérer aux parois des bouteilles, notamment celles riches en inclusions graisseuses.

Les cartouches filtrantes peuvent être préremplies des levures adéquates, sous forme lyophilisée ou non, et être vendues prêtes à l'emploi aux caves ou coopératives vinicoles.

Il est à noter que l'on peut faire varier à la demande la nature de chacune des membranes filtrantes qui sont généralement en polymère biologiquement inerte comme par exemple les esters de cellulose, le polytétrafluoroéthylène ou le polyfluorure de vinylidène, la proportion relative des superficies des deux membranes filtrantes, leurs degrés respectifs d'hydrophobie et d'hydrophilie, leurs porosités respectives et les diamètres de leurs pores, ces derniers étant généralement compris entre 0,1 et 3 et de préférence entre 0,2 et 1 micron.

On peut utiliser éventuellement à la place des membranes filtrantes des membranes semi-perméables présentant les caractères hydrophobe et hydrophile requis.

Comme on l'a déjà signalé précédemment, l'utilisation d'une cartouche selon l'invention pour la fermentation carboxylique du vin en bouteille selon la méthode champenoise supprime les opérations de manipulation et de remuage des bouteilles et la nécessité de congeler le goulot des bouteilles au moment du dégorgement.

De plus, les pertes de vin lors de l'opération de dégorgement des bouteilles munies d'une cartouche tubulaire filtrante selon l'invention sont minimes puisqu'elles sont limitées à la quantité de vin qui se trouve à l'intérieur de la cartouche lors de son éjection.

Des essais ont eu lieu avec les cartouches tubulaires filtrantes décrites ci-dessus pour obtenir des vins mousseux ou du champagne et ont donné des résultats satisfaisants.

Il est évident que des modifications pourraient être apportées aux dispositifs de la présente invention sans sortir de son cadre.

C'est ainsi que la cartouche tubulaire filtrante selon l'invention pourrait comporter à sa partie supérieure, comme représenté sur les figures 10 et 11, au lieu d'un embout cylindrique, un élément de flottaison 29 assurant la préhension de la cartouche au moment de l'ouverture de la bouteille.

Cet élément 29 peut consister par exemple en un simple tube en matière plastique soudée à la partie supérieure du corps tubulaire de la cartouche et fermé à son autre extrémité, de façon à enfermer un volume correspondant d'air.

La réalisation des figures 10 et 11 a donné expérimentalement de bons résultats et permet d'obtenir une fermentation sensiblement plus régulière que les réalisations représentées sur les figures 1 à 9, probablement par suite de la présence de la cartouche au milieu de la bouteille, comme représenté sur la figure 10, lors de la fermentation.

Une autre modification de la cartouche selon la présente invention consiste en ce que l'une des membranes par exemple la membrane hydrophile recouvre la totalité de la surface cylindrique perforée de la cartouche et l'autre membrane, par exemple la membrane hydrophobe, recouvre l'extrémité inférieure ouverte de la cartouche.

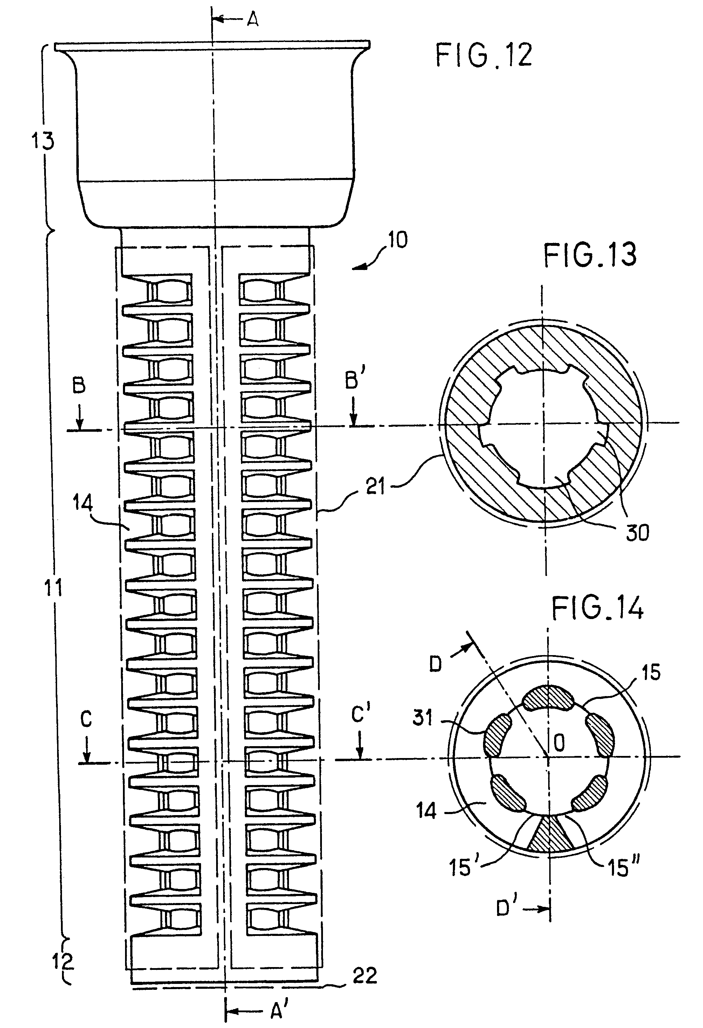

Cette modification qui va maintenant être décrite et constitue la variante préférée de la présente invention, fait l'objet des figures 12 à 17 sur lesquelles les mêmes numéros de référence ont été utilisés pour désigner les mêmes éléments que ceux des variantes précédentes..

Comme le montrent les figures 12, 15 et 16, l'extrémité inférieure 12 du corps tubulaire dans cette variante est ouverte et recouverte par la membrane filtrante hydrophobe 22, la membrane filtrante hydrophile 21 pouvant alors recouvrir la totalité de la surface extérieure rainurée du corps tubulaire 11.

D'autre part, chaque rainure circulaire 14 est munie d'un plus grand nombre de perforations 15, en particulier des perforations 15' et 15'' (voir figure 14) sont prévues de part et d'autre de la partie rectiligne 16 pour éviter la formation de cul-de-sac ou d'impasses et assurer aussi bien le remplissage complet des rainures 14 avec les levures que l'évacuation du gaz carbonique de ces rainures.

Dans cette variante, le corps tubulaire 11 comporte des gorges intérieures longitudinales 30, (fig. 13), parallèles à son axe et dont la profondeur, pratiquée dans l'épaisseur des parois du corps tubulaire 11 est telle que le fond de ces gorges 30 communique avec le fond des rainures circulaires 14 pour former les perforations 15.

Comme le montre la forme en haricot (31) des parois du corps tubulaire 11 sur la figure 14, les bords de ces gorges 30 et des rainures 14 sont arrondis pour faciliter au maximum l'écoulement des levures à travers les perforations 15.

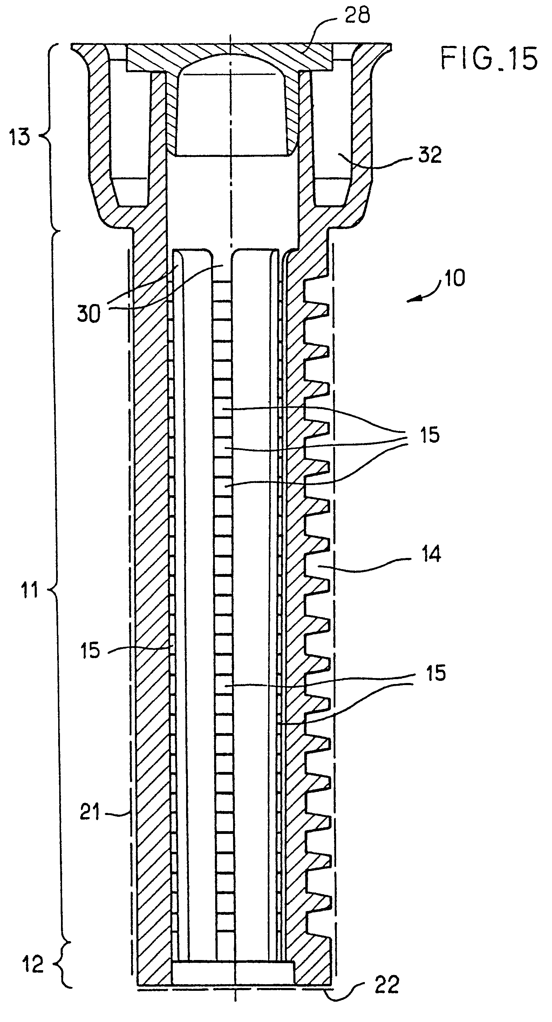

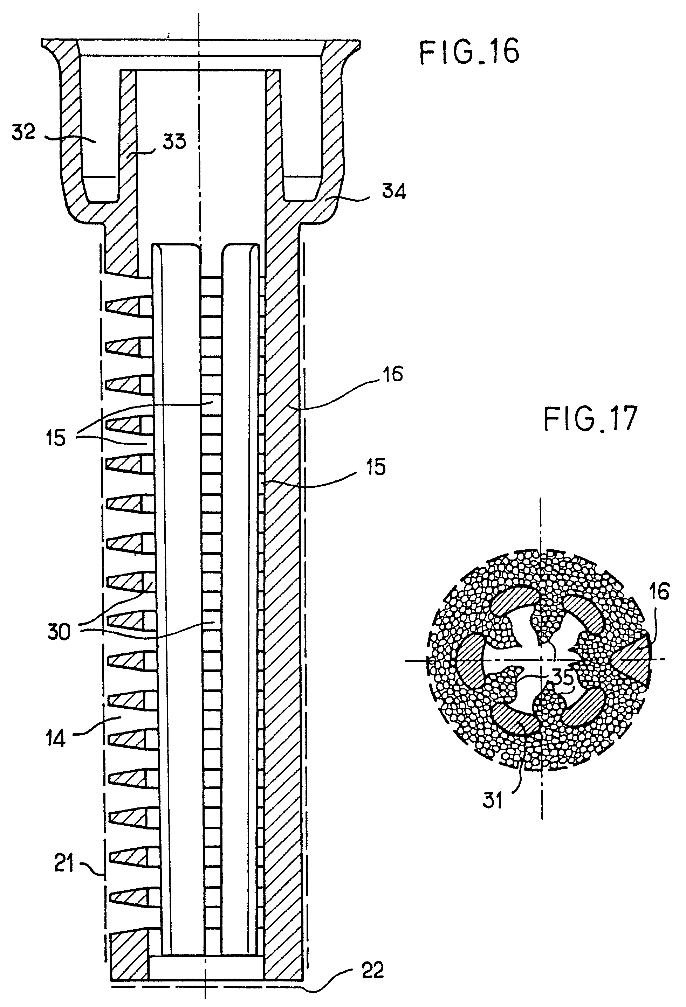

Enfin, comme indiqué sur les figures 15 et 16, l'alésage interne du corps tubulaire 11 se prolonge en 33 jusqu'à proximité de l'extrémité supérieure de l'embout cylindrique 13 en ménageant un espace annulaire 32 situé entre ce prolongement cylindrique 33 et les parois 34 de cet embout.

Un tel prolongement 33 présente un double intérêt.

Il permet tout d'abord de limiter le volume dans lequel vont se répandre les levures sans être au contact de la membrane hydrophile.

Il permet également, par coopération avec un couvercle 28 assurant la fermeture étanche de l'extrémité supérieure du prolongement 33 sans que le couvercle entre en contact avec les parois 34 de l'embout 13, de maintenir l'élasticité des parois 34 (fig. 15); or cette élasticité est importante, car les parois 34 doivent assurer l'étanchéité avec le goulot de la bouteille, lorsque la cartouche est enfoncée dans ce dernier, comme représenté sur la figure 9 à propos de la première forme de réalisation de l'invention.

La Demanderesse a obtenu les meilleurs résultats par refermentation du vin en bouteille avec les cartouches selon la variante des figures 12 à 17 et elle pense qu'ils peuvent s'expliquer de la manière suivante.

En début de fermentation, les levures sont plaquées sur la face interne de la membrane filtrante hydrophile 21 sous l'effet de la production de gaz carbonique qui se forme à l'intérieur de la cartouche et ne peut s'en échapper qu'à travers la membrane filtrante hydrophobe 22.

La nourriture des levures par le vin sucré au travers de la membrane hydrophile est assurée par le phénomène de capillarité propre aux membranes microporeuses ou semi-perméables.

Au fur et à mesure de la fermentation, les levures ont tendance à augmenter de volume par bourgeonnement et la demanderesse a constaté que les levures qui ont envahi dès le début les rainures se développent sous forme d'excroissances radiales 35 (fig. 17), passant à travers les perforations 15, 15' et 15'' et dirigées vers l'axe de la cartouche.

La variante en question, qui évite les poches d'air ou les bras morts et favorise l'évacuation axiale du gaz carbonique hors de la cartouche, permet d'obtenir, selon les oenologues, un vin mousseux de meilleure qualité.

Il convient de noter que, d'une manière générale, les cartouches filtrantes selon l'invention, dans lesquelles, contrairement à la méthode dite «champenoise», les levures ne sont pas directement en contact avec le sucre à l'intérieur de la bouteille, ont tendance à réguler le phénomène de refermentation du vin, même si l'on ne dispose pas d'une cave maintenue à basse température.

## Revendications

1. Cartouche tubulaire filtrante (10), caractérisée en ce qu'elle comprend un corps tubulaire perforé (11) et deux membranes filtrantes, une partie des perforations (15) du corps de la cartouche étant recouverte par une membrane filtrante hydrophile (21) et l'autre partie des perforations (15) par une membrane filtrante hydrophobe (22).

2. Cartouche selon la revendication 1, caractérisée en ce que les membranes sont toutes deux fixées à l'extérieur du corps de la cartouche, notamment par soudage ou collage.

3. Cartouche selon la revendication 1 ou 2, caractérisée en ce que le corps tubulaire (11) comporte une série de rainures extérieures (14) et une série de perforations (15) pratiquées à l'intérieur de ces rainures, de préférence lesdites rainures étant circulaires et occupant plus de trois quarts de la circonférence extérieure de la cartouche, tout en laissant une partie non rainurée (16) de la circonférence alignée selon une génératrice.

4. Cartouche selon la revendication 1, 2 ou 3, caractérisée en ce qu'elle comporte une extrémité fermée (12) et que chacune des deux membranes filtrantes hydrophile (21) et hydrophobe (22) est soudée sur la partie cylindrique du corps tubulaire (11) de la cartouche.

5. Cartouche selon l'une quelconque des revendications précédentes, caractérisée en ce que les deux membranes filtrantes sont soudées longitudinalement selon une génératrice du corps tubulaire de la cartouche, notamment dans sa partie non rainurée (16).

6. Cartouche selon la revendication 3 prise éventuellement en combinaison avec l'une des revendications 4 ou 5, caractérisée en ce que les deux membranes hydrophile et hydrophobe sont soudées circulairement le long de chacun des rebords (17) définissant les rainures extérieures circulaires (14) du corps de la cartouche.

7. Cartouche selon l'une quelconque des revendications précédentes, caractérisée en ce que les deux membranes hydrophile et hydrophobe sont soudées entre elles selon une ligne de soudure (23).

8. Cartouche selon l'une quelconque des revendications 4 à 7, caractérisée en ce que l'extrémité opposée à l'extrémité fermée comporte un embout cylindrique (13) de préférence en une matière thermoplastique souple, notamment en polyéthlène, et dont le diamètre, plus grand que celui du corps tubulaire (11) correspond au diamètre du goulot d'une bouteille et peut servir de bouchon étanche à cette dernière.

9. Cartouche selon la revendication 1, 2 ou 3, caractérisée en ce qu'elle comporte une extrémité ouverte (12) recouverte par la membrane filtrante hydrophobe (22) et que la totalité de la surface extérieure cylindrique du corps tubulaire perforé est recouverte par la membrane filtrante hydrophile (21).

10. Cartouche selon la revendication 9, caractérisée en ce que le corps tubulaire (11) comporte une série de gorges intérieures longitudinales (30) parallèles à son axe et une série de perforations (15) pratiquées à l'intérieur de ces gorges.

11. Cartouche selon l'une quelconque des revendications précédentes, caractérisée en ce qu'elle contient des levures provoquant une fermentation du vin sucré avec dégagement de gaz carbonique, notamment des espèces Saccharomyces cerevisiae ou Saccharmoyces bayanus.

12. Application de la cartouche tubulaire filtrante (10) selon l'une quelconque des revendications précédentes à la refermentation de vin sucré en bouteille selon la méthode champenoise.

13. Procédé de fermentation du vin en bouteille selon la méthode champenoise, caractérisé par le fait que dans chaque bouteille de vin additionné de la quantité de sucre nécessaire pour obtenir la pression finale de gaz carbonique désirée, on introduit une cartouche tubulaire filtrante (10) selon l'une quelconque des revendications 1 à 11, cette fermentation pouvant être effectuée en dehors d'une cave.

**Patentansprüche**

1. Rohrförmiger Filtereinsatz (10), dadurch gekennzeichnet, daß er einen perforierten rohrförmigen Körper (11) und zwei filtrierende Membranen umfaßt, wobei ein Abschnitt der Perforationen (15) des Körpers des Einsatzes durch eine hydrophile filtierierende Membran (21) bedeckt ist und der andere Abschnitt der Perforationen (15) durch eine hydrophobe filtrierende Membran (22) bedeckt ist.

2. Einsatz nach Anspruch 1, dadurch gekennzeichnet, daß die Membranen beide an der Außenseite des Einsatzes, insbesondere durch Verschweißen oder Verkleben, befestigt sind.

3. Einsatz nach Anspruch 1 oder 2, dadurch gekennzeichnet, daß der rohrförmige Körper (11) eine Reihe äußerer Nuten (14) und eine Reihe Perforationen (15) umfaßt, die im Inneren der Nuten ausgebildet sind, wobei die Nuten vorzugsweise ringförmig sind und mehr als drei Viertel des äußeren Umfanges des Einsatzes einnehmen, wobei ein nicht mit Nuten versehener Abschnitt (16) des Umfanges verbleibt, welcher sich entlang einer Mantellinie erstreckt.

4. Einsatz nach Anspruch 1, 2 oder 3, dadurch gekennzeichnet, daß er ein geschlossenes Ende (12) besitzt und daß jede der beiden filtrierenden Membranen, die hydrophile (21) und die hydrophobe (22), auf den zylindrischen Abschnitt des rohrförmigen Körpers (11) des Einsatzes geschweißt ist.

5. Einsatz nach einem der vorgehenden Ansprüche, dadurch gekennzeichnet, daß die beiden filtrierenden Membranen längs einer Mantellinie des rohrförmigen Körpers des Einsatzes, insbesondere in seinem nicht mit Nuten versehenem Abschnitt (16), verschweißt sind.

6. Einsatz nach Anspruch 3 eventuell in Kombination mit einem der Ansprüche 4 oder 5, dadurch gekennzeichnet, daß die beiden Membranen, die hydrophile und die hydrophobe, ringförmig entlang eines jeden der Ränder (17) verschweißt sind, die die äußeren ringförmigen Nuten (14) des Körpers des Einsatzes bilden.

7. Einsatz nach einem der vorhergehenden Ansprüche, dadurch gekennezichnet, daß die beiden Membranen, die hydrophile und die hydrophobe, entlang einer Schweißnaht (23) miteinander verschweißt sind.

8. Einsatz nach einem der Ansprüche 4 bis 7, dadurch gekennzeichnet, daß das dem geschlossenen Ende gegenübergelegene Ende ein zylindrisches Ansatzstück (13) umfaßt, das vorzugsweise aus einem weichen thermoplastischen Material, insbesondere Polyäthylen besteht und dessen Durchmesser, der größer ist als der des rohrförmigen Körpers (11), dem Durchmesser des Flaschenhalses einer Flasche entspricht und somit als dichter Stopfen für diese dienen kann.

9. Einsatz nach einem der Ansprüche 1, 2 oder 3, dadurch gekennzeichnet, daß er ein offenes Ende (12) umfaßt, welches durch die hydrophobe, filtrierende Membran (22) bedeckt ist und daß die Gesamtheit der äußeren zylindrischen Oberfläche des perforierten rohrförmigen Körpers durch die hydrophile, filtrierende Membran (21) bedeckt ist.

10. Einsatz nach Anspruch 9, dadurch gekennzeichnet, daß der rohrförmige Körper (11) eine Reihe innerer, länglicher, achsparalleler Vertiefungen (30) und eine Reihe von Perforationen (15) umfaßt, die im Inneren der Vertiefungen ausgebildet sind.

11. Einsatz nach einem der vorhergehenden Ansprüche, dadurch gekennezichnet, daß er Hefen enthält, die eine Fermentation des gezuckerten Weines unter Freisetzung von Kohlensäuregas hervorrufen, die insbesondere zur Spezies Saccharomyces Cerevisiae oder Saccharomyces Bayanus gehören.

12. Anwendung des rohrförmigen Filtereinsatzes (10) nach einem der vorhergehenden Ansprüche zur Nachgärung von gezuckertem Wein in Flaschen nach der Champagnermethode.

13. Verfahren zur Gärung von Wein in einer Flasche nach der Champagnermethode, dadurch gekennzeichnet, daß man in jeder Flasche mit Wein, dem die zur Erzielung des gewünschten endgültigen Kohlensäuregasdrucks notwendige Menge Zucker beigegeben ist, einen rohrförmigen Filtereinsatz (10) nach einem der Ansprüche 1 bis 11 einführt, wobei die Gärung außerhalb eines Kellers bewirkt werden kann.

## Claims

1. Tubular filter cartridge (10) characterised in that it comprises a perforated tubular body (11) and two filter membranes, some of the perforations (15) of the cartridge body being covered by a hydrophilic filter membrane (21) and the remainder of the perforations (15) being covered by a hydrophobic filter membrane (22).

2. Cartridge according to claim 1 characterised in that the membranes are both fixed to the exterior of the cartridge body in particular by welding or adhesive bonding.

3. Cartridge according to claim 1 or claim 2 characterised in that the tubular body (11) comprises a series of external grooves (14) and a series of perforations (15) within the grooves, said grooves preferably being circular and occupying more than three quarters of the external circumference of the cartridge, leaving an ungrooved part (16) of the circumference aligned with a generatrix.

4. Cartridge according to claim 1 or claim 2 or claim 3 characterised in that it comprises a closed end (12) and the hydrophilic filter membrane (21) and the hydrophobic filter membrane (22) are each welded to the cylindrical part of the tubular body (11) of the cartridge.

5. Cartridge according to any one of the preceding claims characterised in that both filter membranes are welded longitudinally along a generatrix of the tubular body of the cartridge in particular in its ungrooved part (16).

6. Cartridge according to claim 3 optionally taken in combination with either of claims 4 and 5 characterised in that the hydrophilic and hydrophobic membranes are both welded circularly along each of the lips (17) defining the circular external grooves (14) on the cartridge body.

7. Cartridge according to any one of the preceding claims characterised in that hydrophilic and hydrophobic membranes are both welded together along a weld line (23).

8. Cartridge according to any one of claims 4 through 7 characterised in that the end opposite the closed end comprises a cylindrical end-piece (13) preferably made from a flexible thermoplastics material such as polyethylene and the diameter of which is greater than that of the tubular body (11) and corresponds to the diameter of the neck of a bottle and is adapted to serve as a fluid-tight stopper for the latter.

9. Cartridge according to claim 1 or claim 2 or claim 3 characterised in that it comprises an open end (12) covered by the hydrophobic filter membrane (22) and that all of the cylindrical external surface of the perforated tubular body is covered by the hydrophilic filter membrane (21).

10. Cartridge according to claim 9 characterised in that the tubular body (11) comprises a series of longitudinal internal grooves (30) parallel to its axis and a series of perforations (15) inside the grooves.

11. Cartridge according to any one of the preceding claims characterised in that it contains yeasts causing fermentation of sugared wine and the release of carbon dioxide, in particular yeasts of the species Saccharomyces cerevisiae or Saccharomyces bayanus.

12. Application of the tubular filter cartridge (10) acording to any one of the preceding claims to the refermentation of sugared wine in the bottle by the méthode champenoise.

13. Method of fermenting wine in the bottle by the méthode champenoise characterised in that there is inserted into each bottle of wine after the quantity of sugar necessary to obtain the required final carbon dioxide pressure has been added a tubular filter cartridge (10) according to any one of claims 1 through 11, it being possible to carry out said fermentation in places other than cellars.

# FIG.1

# FIG. 2

# FIG. 4

# FIG. 3

# FIG.5

# FIG. 6

FIG. 8

FIG. 7

FIG.9

FIG.11

FIG.10

FIG.12

FIG.13

FIG.14

19

FIG.15

FIG.16

FIG.17

23